# EUROPEAN PATENT APPLICATION

(11) **EP 4 757 275 A1**
(43) Date of publication of application: **10.06.2026**
(21) Application number: 24861462.0
(22) Date of filing: 18.03.2024
(51) Int. Cl.: H04L 47/283

(54) **PACKET FORWARDING METHODS, STORAGE MEDIUM AND ELECTRONIC APPARATUS**

(30) Priority: 05.09.2023 CN 202311148915
(71) Applicant: ZTE CORPORATION, Shenzhen, Guangdong 518057 (CN)
(72) Inventor: PENG, Shaofu, Shenzhen, Guangdong 518057 (CN); CHEN, Xiao, Shenzhen, Guangdong 518057 (CN)
(74) Representative: Mozzi, Matteo
(86) International application number: PCT/CN2024/082279
(87) International publication number: WO 2025/050611

(57) **Abstract**

Provided are a packet forwarding method, a storage medium and an electronic apparatus. The method includes: acquiring a first residence reference value of a first packet, and inserting the first packet into a corresponding position of an ordered queue according to the first residence reference value; and forwarding the first packet according to a forwarding mode of the ordered queue.

## Description

### Cross-Reference to Related Application

The present application is based on and claims the benefit of priority of Chinese Patent Application No. CN202311148915.2, filed on 05 September 2023 and entitled "Packet forwarding method, storage medium and electronic device", the disclosure of which is incorporated herein by reference in its entirety.

### Technical Field

Embodiments of the present disclosure relate to the field of communications, and in particular, to a packet forwarding method, a storage medium and an electronic device.

### Background

RFC8655 describes the architecture of deterministic networks, defining Quality of Service (QoS) objectives for deterministic forwarding: minimum and maximum latency from a source to a destination and bounded latency jitter, an allowed packet loss rate, and an upper bound of out-of-order packet delivery. In order to achieve these objectives, the deterministic network adopts means such as resource reservation, explicit routing, and service protection. Generally, a deterministic path is a strictly explicit path acquired through calculation by relying on a centralized controller, and resources are reserved on nodes along the path, so as to meet service level agreement (SLA) requirements of a deterministic service.

In the related art, a forwarding mechanism based on a deadline is proposed, in which a single deadline is used to control packet scheduling of all nodes along a path, and the deadline is an offset time representing a planned residence time D of a packet in a node. In addition, the allowed residence time Q of the packet in the node can be dynamically adjusted in accordance with the accumulated residence time deviation E carried in the packet, so as to distinguish the Eligibility Arrival Burst (EAB) from the Ineligibility Arrival Burst (IAB) and acquire a low end-to-end delay jitter. The solution discusses two queue models, one is a Sorted Queue (SQ), for example, a single Put-In First-Out (PIFO) or a linked list, elements in the Sorted Queue are sorted according to a certain method, and newly arrived elements can be inserted into any position, but packets are always taken from the head of the queue for processed; the other is a Rotation Priority Queue (RPQ), such as a countdown queue group defined in the solution. Different queues in the group have different Count Down (CT). A queue with a smaller countdown has a higher scheduling priority, and preferentially sends packets. A packet enters a queue with a corresponding countdown CT according to its allowable residence time. However, this solution mainly assumes that a node in a network adopt an in-time forwarding (or work-forwarding) behavior, which causes accumulation of burst received on the node and consumes a large amount of cache. In addition, the queue allocation method of the queue mechanism in the related art is unreasonable, and packets are prone to violating their deadlines.

### Summary

Embodiments of the present disclosure provide a packet forwarding method, a storage medium, and an electronic device, so as to at least solve the problems in the related art of large cache consumption and packets prone to violating their deadlines.

According to an embodiment of the present disclosure, a packet forwarding method is provided, including: acquiring a first residence reference value of a first packet, and inserting the first packet into a corresponding position of an ordered queue according to the first residence reference value; and forwarding the first packet according to a forwarding mode of the ordered queue.

According to another embodiment of the present disclosure, a packet forwarding method is provided, including: acquiring an allowed queuing delay and a second residence reference value of a second packet, and inserting the second packet into a corresponding position of a rotation priority queue according to the allowed queuing delay and the second residence reference value; and forwarding the second packet according to a forwarding mode of the rotation priority queue.

According to still another embodiment of the present disclosure, a computer readable storage medium is further provided. The computer readable storage medium stores a computer program, where the computer program is configured to execute the steps in any one of the abovementioned method embodiments when running.

According to still another embodiment of the present disclosure, an electronic device is further provided, including a memory and a processor, where the memory stores a computer program, and the processor is configured to run the computer program to execute the steps in any one of the abovementioned method embodiments.

### Brief Description of the Drawings

Fig. 1 is a structural block diagram of hardware of a computer terminal of a packet forwarding method according to embodiments of the present disclosure;
Fig. 2 is a schematic diagram of an operating network architecture of a packet forwarding method according to embodiments of the present disclosure;
Fig. 3 is a flowchart of a packet forwarding method according to embodiments of the present disclosure;
Fig. 4 is a flowchart of a packet forwarding method according to embodiments of the present disclosure;
Fig. 5 is a schematic diagram of a relationship between virtual parent-queues and physical sub-queues according to embodiments of the present disclosure;
Fig. 6 is a schematic diagram of a relationship between minimum countdown values and maximum countdown values according to embodiments of the present disclosure;
Fig. 7 is a schematic diagram of another relationship between minimum countdown values and maximum countdown values according to embodiments of the present disclosure; and
Fig. 8 is a schematic diagram of a delay evaluation according to embodiments of the present disclosure.

### Detailed Description of the Embodiments

The embodiments of the present disclosure are described below in detail with reference to the drawings and in conjunction with the embodiments.

It is to be noted that terms "first", "second" and the like in the description, claims and the abovementioned drawings of the present disclosure are used for distinguishing similar objects rather than describing a specific sequence or a precedence order.

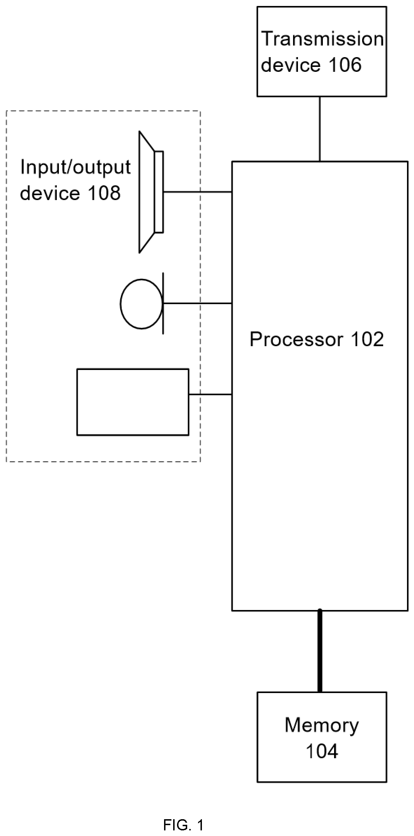

The method embodiments provided in the embodiments of the present disclosure may be executed in a mobile terminal, a computer terminal or a similar computing apparatus. Taking operation on the computer terminal as an example, Fig. 1 is a block diagram of a hardware structure of a computer terminal of a packet forwarding method according to an embodiment of the present disclosure. As shown in Fig. 1, the computer terminal may include one or more (only one is shown in Fig. 1) processors 102 (the processor 102 may include, but is not limited to, a Microcontroller Unit (MCU) or a Field Programmable Gate Array (FPGA), or other processing apparatuses) and a memory 104 configured to store data. The above computer terminal may further include a transmission device 106 configured to achieve a communication function, and an input/output device 108. Those skilled in the art may understand that the structure shown in Fig. 1 is only a schematic diagram, which does not limit the structure of the above computer terminal. For example, the computer terminal may further include more or less components than those shown in Fig. 1, or have a different configuration from that shown in Fig. 1.

The memory 104 may be configured to store a computer program, for example, a software program and a module of application software, such as a computer program corresponding to a packet forwarding method in the embodiments of the present disclosure. The processor 102 runs the computer program stored in the memory 104, so as to execute various functional applications and data processing, that is, to implement the above method. The memory 104 may include a high-speed random access memory, and may further include a non-volatile memory, such as one or more magnetic disk memory apparatuses, a flash memory device, or other non-volatile solid-state memory devices. In some examples, the memory 104 may further include memories remotely disposed relative to the processor 102. The remote memories may be connected to the computer terminal by using a network. Examples of the above network include, but are not limited to, the Internet, an intranet, a local area network, a mobile communication network, and a combination thereof.

The transmission apparatus 106 is configured to receive or send data via the network. The specific example of the above network may include a wireless network provided by a communication provider of the computer terminal. In an example, the transmission apparatus 106 includes a Network Interface Controller (NIC), and may be connected to other network devices by using a base station, so as to communicate with the Internet. In an example, the transmission apparatus 106 is a Radio Frequency (RF) module, which is configured to communicate with the Internet in a wireless manner.

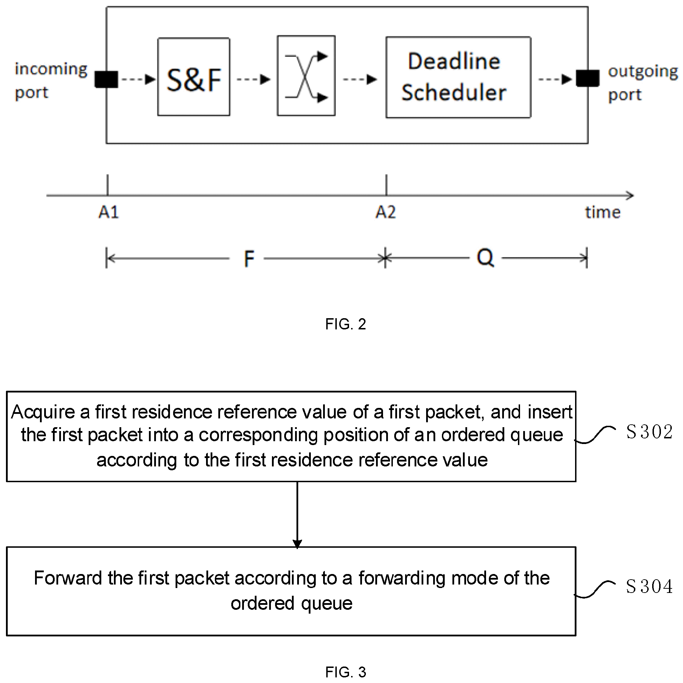

The embodiments of the present disclosure may operate on the network architecture shown in Fig. 2. Fig. 2 is a schematic diagram of an operating network architecture of a packet forwarding method according to embodiments of the present disclosure. As shown in Fig. 2, the network architecture includes: an incoming port, an outgoing port, storage/forwarding (S&F), processing, an internal switching network, and a deadline scheduler. It is assumed that the time when the packet arrives at the incoming port is A1, and after a forwarding delay (F) within the node, which is composed of storage/forwarding (S&F), processing, internal switching network, etc., the time when the packet arrives at the deadline scheduler of the outgoing port is A2, and then after a queuing delay (Q), the packet is sent to the outgoing port. That is to say, the residence delay of the packet in the node is simply composed by F and Q, where F is generally a fixed value (a maximum value of an actual forwarding delay in the node may be selected as F), and Q is not fixed.

The embodiments of the present disclosure provide a packet forwarding method running on the abovementioned computer terminal or network architecture. Fig. 3 is a flowchart of a packet forwarding method according to embodiments of the present disclosure. As shown in Fig. 3, the flow includes the following steps:
Step S302, acquiring a first residence reference value of a first packet, and inserting the first packet into a corresponding position of an ordered queue according to the first residence reference value.

In an exemplary embodiment, the first residence reference value is a sum of a time at which the first packet arrives at an incoming port of a node, a planned residence time of the first packet in the node, and an accumulated residence time deviation carried in the first packet.

In an actual implementation process, the time at which the first packet arrives at the incoming port of the node is A1, the planned residence time of the first packet in the node is D, the accumulated residence time deviation carried in the first packet is E, and then the first residence reference value is A1+D+E.

In an exemplary embodiment, inserting the first packet into a corresponding position of an ordered queue according to the first residence reference value includes: inserting the first packet at a position closer to a head of the ordered queue for a smaller first residence reference value; inserting the first packet at a position closer to the head of the ordered queue for a smaller planned residence time when the first residence reference values are equal; and inserting the first packet at a position closer to the head of the ordered queue for an earlier arrival at an outgoing port of the node when both the first residence reference values and the planned residence times are equal.

In an actual implementation process, if the first residence reference values, i.e., A1+D+E, of the two packets are equal, the packet with the smaller planned residence time D is placed at the front, and inserted into a position closer to the head of the ordered queue. If the first residency reference values, i.e., A1+D+E, of the two packets are equal and the planned residency time D is also equal, the packets are inserted according to the order of arrival at the deadline scheduler, and the packet that arrives at the scheduler first is placed at the front.

Step S304, forwarding the first packet according to a forwarding mode of the ordered queue.

In an exemplary embodiment, forwarding the first packet according to a forwarding mode of the ordered queue includes: in response to the forwarding mode being in-time forwarding, acquiring the first packet from the head of the ordered queue for forwarding.

In an exemplary embodiment, forwarding the first packet according to a forwarding mode of the ordered queue includes: in response to the forwarding mode being on-time forwarding, determining whether the first residence reference value of the first packet at the head of the ordered queue is less than or equal to a current time, and if so, forwarding the first packet.

In an actual implementation process, when forwarding the first packet according to the forwarding mode of the ordered queue, the ordered queue must not be empty. In the case where the forwarding mode is in-time forwarding, the first packet is acquired from the head of the ordered queue for forwarding. In the on-time forwarding mode, if the ordered queue is not empty and A1+D+E of the head packet is equal to or earlier than the current time, the head packet is sent, otherwise, the head packet is not sent. Every time a head packet is sent, a new head packet is checked to determine whether to send it.

By means of the described steps, a packet forwarding method is provided, including: acquiring a first residence reference value of a first packet, and inserting the first packet into a corresponding position of an ordered queue according to the first residence reference value; and forwarding the first packet according to a forwarding mode of the ordered queue. The problems in the related art of large cache consumption and packets prone to violating their deadlines are solved, and the effects of reducing cache consumption and effectively completing packet forwarding within deadlines are achieved.

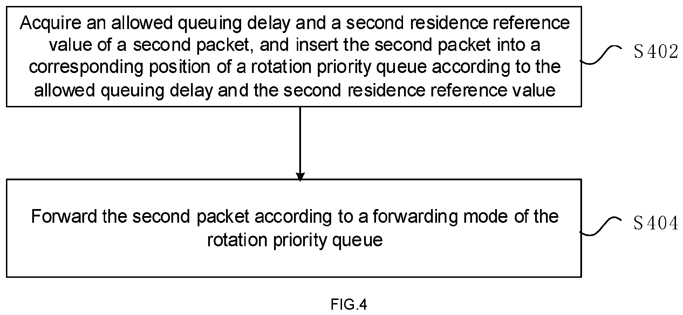

The embodiments of the present disclosure further provide a packet forwarding method. Fig. 4 is a flowchart of a packet forwarding method according to embodiments of the present disclosure. As shown in Fig. 4, the flow includes the following steps:
Step S402, acquiring an allowed queuing delay and a second residence reference value of a second packet, and inserting the second packet into a corresponding position of a rotation priority queue according to the allowed queuing delay and the second residence reference value.

In an exemplary embodiment, a value of the allowed queuing delay is obtained by subtracting a forwarding delay of the second packet in a node from a sum of a planned residence time of the second packet in the node and an accumulated residence time deviation carried in the second packet; the second residence reference value is obtained by subtracting the forwarding delay of the second packet in the node from the planned residence time of the second packet in the node.

In an actual implementation process, the planned residence time of the second packet in the node is D, the accumulated residence time deviation carried in the second packet is E, and the forwarding delay of the second packet in the node is F, so the value of the allowed queuing delay is Q = D+E-F. The second residence reference value is D-F.

In an actual implementation process, a virtual parent-queue is selected according to the value of the allowed queuing delay, and a physical sub-queue in the virtual parent-queue is selected according to the value of the second residence reference value.

In an exemplary embodiment, inserting the second packet into a corresponding position of a rotation priority queue according to the allowed queuing delay and the second residence reference value includes: selecting a virtual parent-queue of the rotation priority queue according to the allowed queuing delay, wherein a first priority of the selected virtual parent-queue is less than or equal to the allowed queuing delay, and a sum of the first priority and a priority arithmetic interval AT is greater than the allowed queuing delay, wherein the priority arithmetic interval is a difference between first priorities of adjacent virtual parent-queues; and selecting a physical sub-queue of the virtual parent-queue according to the second residence reference value, wherein a difference value between a delay level of the selected physical sub-queue and the second residence reference value is the smallest, and the delay level is less than or equal to the second residence reference value.

In an actual implementation process, a countdown CT may be used to represent the first priority.

Step S404, forwarding the second packet according to a forwarding mode of the rotation priority queue.

In an exemplary embodiment, forwarding the second packet according to a forwarding mode of the rotation priority queue includes: in response to the forwarding mode being in-time forwarding, selecting, among the rotation priority queue, the second packet from a virtual parent-queue with a highest priority for forwarding.

In an actual implementation process, in the in-time forwarding mode, as long as any virtual parent-queue is non-empty, a packet is always acquired from the non-empty virtual parent-queue with the currently highest priority for sending. In an embodiment, among a plurality of non-empty physical sub-queues under the virtual queue, packets are successively acquired from the non-empty physical sub-queues in a direction from a physical sub-queue with a small delay level to a physical sub-queue with a large delay level for sending. Only after one physical sub-queue is cleared, the next non-empty physical sub-queue is read.

In an exemplary embodiment, forwarding the second packet according to a forwarding mode of the rotation priority queue includes: in response to the forwarding mode being on-time forwarding, selecting, among virtual parent-queues of the rotation priority queue having a countdown CT less than or equal to 0, the second packet from a virtual parent-queue with a highest priority for forwarding.

In an actual implementation process, when the scheduler is configured in the on-time forwarding mode, the packet is always acquired from the non-empty virtual parent-queue with the currently highest priority (and CT≤0) for sending. In an embodiment, among a plurality of non-empty physical sub-queues under the virtual queue, packets are successively acquired from the non-empty physical sub-queues in a direction from a physical sub-queue with a small delay level to a physical sub-queue with a large delay level for sending. Only after one physical sub-queue is cleared, the next non-empty physical sub-queue is read. Note that any virtual parent-queue with CT>0 is not allowed to send packets.

In an exemplary embodiment, selecting the second packet from a virtual parent-queue with a highest priority for forwarding includes: selecting, from all the virtual parent-queues, a non-empty virtual parent-queue having a minimum countdown CT as the virtual parent-queue with the highest priority; and acquiring the second packet from a non-empty physical sub-queue according to an ascending order of delay levels of the physical sub-queues of the virtual parent-queue for forwarding.

In an exemplary embodiment, after selecting, from all the virtual parent-queues, a non-empty virtual parent-queue having a minimum countdown CT as the virtual parent-queue with the highest priority, the method further includes: in response to the forwarding mode being in-time forwarding, flipping a CT value of a virtual parent-queue, of which a minimum achievable CT value is -2*AT, to a preset maximum CT value.

In an actual implementation process, when the deadline scheduler of the countdown queue is configured in the in-time forwarding mode, the maximum countdown value is a preset N*AT, for example, N is 100 and AT is 10 us; the minimum countdown value can reach-2*AT, but will be immediately flipped to N*AT. The total number of virtual parent-queues is N+2. Any virtual parent-queue in a sending state (even a virtual parent-queue with CT≤0) always can receive new packets at the same time, i.e. newly arriving packets always select, based on their allowed queue delay Q, a virtual parent-queue with a corresponding CT according to CT≤Q<CT+AT, regardless of whether the virtual parent-queue is in a sending state.

In an exemplary embodiment, after selecting, from all the virtual parent-queues, a non-empty virtual parent-queue having a minimum countdown CT as the virtual parent-queue with the highest priority, the method further includes: in response to the forwarding mode being on-time forwarding, flipping a CT value of a virtual parent-queue, of which a minimum achievable CT value is -(N+1)*AT, to a preset maximum CT value, wherein N is a number of preset delay levels.

In an actual implementation process, when the deadline scheduler of the countdown queue is configured in the in-time forwarding mode, the maximum countdown value is a preset N*AT, for example, N is 100 and AT is 10 us; the minimum countdown value can reach-(N+1)*AT, but will be immediately flipped to N*AT. The total number of virtual parent-queues is 2*N+1. The advantage of this method is that any virtual parent-queue in a sending state (even a virtual parent-queue with CT≤0) always can receive new packets at the same time, i.e. newly arriving packets always select, based on their allowed queue delay Q, a virtual parent-queue with a corresponding CT according to CT≤Q<CT+AT, regardless of whether the virtual parent-queue is in a sending state.

Through the description of embodiments, those skilled in the art can clearly understand that the method according to the above example may be implemented in combination of software and a necessary general-purpose hardware platform and may also be certainly implemented through hardware. However, the former is a preferred embodiment in many cases. Based on such understanding, the technical solutions in essence of the disclosure or the part that contributes to the prior art can be embodied in the form of software products. The computer software product is stored in a storage medium (such as a ROM/RAM, a magnetic disk, or an optical disk), and includes several instructions to make a second node device (such as a mobile phone, a computer, a server, or a network device) execute the method in each example of the disclosure.

The present embodiment further provides a packet forwarding apparatus, which is configured to implement the above embodiments and optional implementations, and what has been described will not be described again. As used below, the term "module" may be a combination of software and/or hardware that implements a predetermined function. Although the system described in the following embodiments is preferably implemented in software, but implementations in hardware, or a combination of software and hardware, are also possible and conceived.

The embodiments of the present disclosure provide a packet forwarding apparatus, including: a first inserting module, configured to acquire a first residence reference value of a first packet, and insert the first packet into a corresponding position of an ordered queue according to the first residence reference value; a first forwarding module, configured to forward the first packet according to a forwarding mode of the ordered queue.

The embodiments of the present disclosure provide a packet forwarding apparatus, which may alternatively include: a second inserting module for an allowed queuing delay and a second residence reference value of a second packet, and insert the second packet into a corresponding position of a rotation priority queue according to the allowed queuing delay and the second residence reference value; and a second forwarding module, configured to forward the second packet according to a forwarding mode of the rotation priority queue.

In an actual implementation process, reference may be made to operations of steps of the packet forwarding method in the abovementioned embodiments for the process in which the packet forwarding apparatus performs packet forwarding. In an embodiment, different steps of the packet forwarding method performed by different modules may be implemented by different units, and details are not described herein again.

It is to be noted that, each of the above modules may be implemented by software or hardware. For the latter, it may be implemented in the following manners, but is not limited to the follow: the above modules are all located in a same processor; or the above modules are located in different processors in any combination.

The embodiments of the present disclosure further provide a computer readable storage medium. The computer readable storage medium stores a computer program, where the computer program is configured to execute the steps in any one of the abovementioned method embodiments when running.

In an exemplary embodiment, the computer readable storage medium may include, but is not limited to, any medium that can store a computer program, such as a USB flash drive, a Read-Only Memory (ROM), a Random Access Memory (RAM), a removable hard disk, a magnetic disk, or an optical disc.

The embodiments of the present disclosure further provide an electronic device, including a memory and a processor, where the memory stores a computer program, and the processor is configured to run the computer program to execute the steps in any one of the abovementioned method embodiments.

In an exemplary embodiment, the electronic device may further include a transmission device and an input/output device, where the transmission device is connected to the processor, and the input/output device is connected to the processor.

Reference may be made to the examples described in the abovementioned embodiments and the exemplary implementations for the examples in this embodiment, and this embodiment will not be repeated thereto.

Apparently, those skilled in the art should understand that all the modules or steps above of the disclosure can be implemented through a general-purpose computation apparatus, centralized on a single computation apparatus or distributed over a network composed of a plurality of computation apparatuses, and implemented through program codes executable by the computation apparatus. Therefore, the modules or steps can be stored in a storage apparatus to be executed by the computation apparatus. In some cases, the steps shown or described can be executed in a different order from herein. Alternatively, the modules or the steps can be implemented by fabricating them into respective integrated circuit modules or fabricating multiple ones of them into one integrated circuit module. In this way, the disclosure is not limited to any particular combination of hardware and software.

In order to enable those skilled in the art to better understand the technical solutions of the embodiments of the present disclosure, descriptions will be given below with reference to specific scenario embodiments.

### Scenario embodiment 1

The embodiments of the present disclosure set the deadline scheduler for different queues including an ordered queue and a priority queue.

The ordered queue is characterized in that elements included therein are ordered according to a certain method (for example, deadline), and newly arrived elements can be inserted into any position in the queue, but packets are always taken from the head of the queue for processing.

In the embodiments of the present disclosure, the following method for inserting a packet into an ordered queue is defined:
a) The method for inserting the packet into the ordered queue is as follows:
   i) Acquire an A1+D+E (or A2+D+E-F) value of the packet, which is the first residence reference value in the abovementioned embodiments, the smaller the value, the closer the insertion position is to the head of the queue. Where, A1 represents the time when the packet arrives the incoming port, A2 represents the time when the packet arrives the scheduler (as shown in Fig. 2, it can be seen that A2 = A1 + F), D represents the planned residence time of the packet in the node allowed, E represents the accumulated residence time deviation carried in the packet, and F represents the forwarding delay of the packet in the node. According to Fig. 2, it can be seen that A1 is the time when the packet arrives at an incoming port, A2 is the time when the packet arrives at an outgoing port, and also is the time when the packet arrives at a deadline scheduler, Q represents a queue delay, F is a forwarding delay of the packet in a node, and a residence delay of the packet in the node is composed of F and Q, in which F is generally a fixed value, and Q is generally not fixed.
   ii) If the A1+D+E values of the two packets are equal, the packet with a smaller D is placed at the front (i.e. closer to the head of the queue).
   iii) If the A1+D+E values of the two packets are equal and D is also equal, the packet that arrives at the scheduler first is placed at the front.
b) The scheduler is configured in an in-time forwarding mode
   In the in-time forwarding mode, as long as the ordered queue is not empty, the packet is always acquired from the head of the queue for sending.
c) The scheduler is configured in a on-time forwarding mode

In the on-time forwarding mode, if the ordered queue is not empty and A1+D+E of the head packet is equal to or earlier than the current time, the head packet is sent, otherwise, the head packet is not sent. Every time a head packet is sent, a new head packet is checked to determine whether to send it.

In such a forwarding method, when the end-to-end delay experienced by a packet corresponding to the specific delay level violates the deadline, the exceeded amount is at most the duration of the delay level.

A rotation priority queue is characterized in that the priority of the queue changes whenever a certain time interval passes. A countdown queue is a specific implementation of rotating a priority queue, that is, using a countdown to represent a priority, and the smaller the countdown of a queue, the higher its priority.

The embodiments of the present disclosure further define the following functions.

### a) Allocation method for rotation priority queue

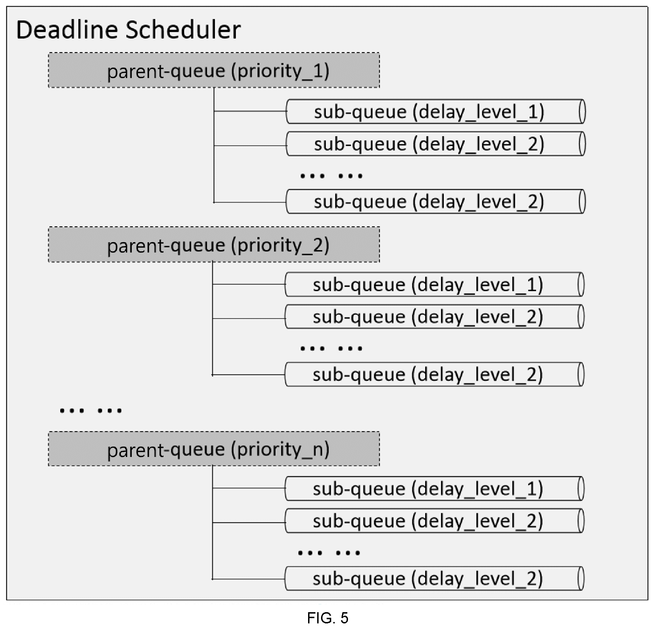

The rotation priority queue includes a plurality of virtual parent-queues, and each virtual parent-queue further includes a plurality of physical sub-queues. Fig. 5 is a schematic diagram of a relationship between virtual parent-queues and physical sub-queues according to embodiments of the present disclosure. As shown in Fig. 5, different virtual parent-queues have different priorities, and whenever a certain time interval passes, the priorities of the virtual parent-queues change, the buffer of each virtual parent-queue is not actually allocated with a fixed size, but all the virtual parent-queues share a buffer with a preset size, each is dynamically allocated on demand.

Under each virtual parent queue, different physical sub-queues are maintained according to different delay levels (delay_level), and packets are actually stored in the physical sub-queues. The physical sub-queue with a smaller delay level is arranged in front of the physical sub-queue with a larger delay level. The actual cache overhead of a virtual parent-queue is contributed by all the physical sub-queues it contains. The cache overhead of each physical sub-queue is also not fixed, and is dynamically allocated according to whether a packet is inserted. However, the maximum cache overhead of a physical sub-queue is equal to the upper limit of the burst resource of the corresponding delay level (note: regarding the value of the upper limit of the burst resource corresponding to the delay level, reference may be made to the schedulability condition in related art draft-peng-detnet-deadline-based-forwarding-06). However, it should be noted that all physical sub-queues corresponding to the same delay level of the virtual parent-queues cannot reach the maximum cache overhead at the same time.

The enqueue method for the packet is as follows:
i) Acquire an allowed queuing delay Q = D+E-F of the packet, wherein the allowed queuing delay in this scenario embodiment is the same as the allowed queuing delay in the described embodiments, and select an appropriate virtual parent-queue according to Q. Where D represents the planned residence time of the packet in the node, E represents the accumulated residence time deviation carried in the packet, and F represents the forwarding delay of the packet in the node.
   For example, when a queue uses a countdown (CT) to represent a priority of the queue, a virtual parent-queue with a corresponding CT is selected according to CT≤Q<CT+AT, where AT is a CT difference between adjacent virtual parent-queues.
ii) Then, under the selected virtual parent-queue, select an appropriate physical sub-queue according to D-F of the packet (where the D-F is the second residence reference value in the described embodiments), so that a delay level delay_level corresponding to the selected physical sub-queue is closest to the D-F and is less than the D-F.

### b) The scheduler is configured in the in-time forwarding mode

In the in-time forwarding mode, as long as any virtual parent-queue is non-empty, a packet is always acquired from the non-empty virtual parent-queue with the currently highest priority for sending. In an embodiment, among a plurality of non-empty physical sub-queues under the virtual queue, packets are successively acquired from the non-empty physical sub-queues in a direction from a physical sub-queue with a small delay level to a physical sub-queue with a large delay level for sending. Only after one physical sub-queue is cleared, the next non-empty physical sub-queue is read.

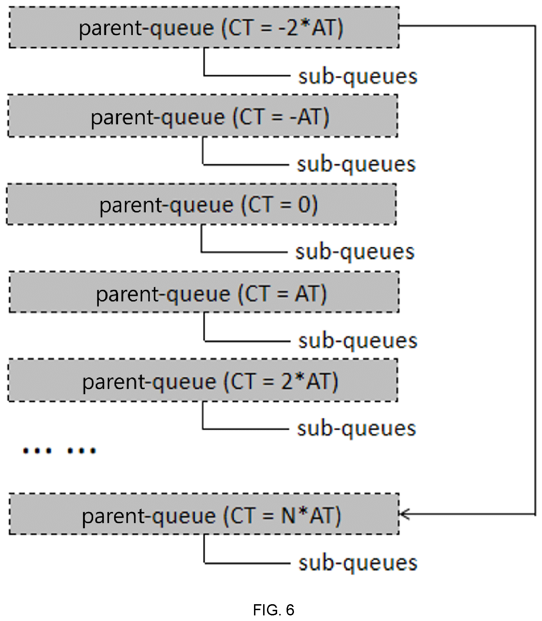

Fig. 6 is a schematic diagram of a relationship between minimum countdown values and maximum countdown values according to embodiments of the present disclosure. As shown in Fig. 6, when the deadline scheduler of the countdown queue is configured in the in-time forwarding mode, the maximum countdown value is a preset N*AT, for example, N is 100 and AT is 10 us; the minimum countdown value can reach-2*AT, but will be immediately flipped to N*AT. The total number of virtual parent-queues is N+2. The advantage of this method is that any virtual parent-queue in a sending state (even a virtual parent-queue with CT≤0) always can receive new packets at the same time, i.e. newly arriving packets always select, based on their allowed queue delay Q, a virtual parent-queue with a corresponding CT according to CT≤Q<CT+AT, regardless of whether the virtual parent-queue is in a sending state.

It should be noted that the reason why the minimum countdown value can reach -2*AT is based on the following consideration: assume that among all current virtual parent-queues, the CT of the virtual parent-queue queue-x is the smallest and is between (-AT, 0), at this time, the burst corresponding to the minimum delay_level is received, and the burst is inserted into the queue-x according to CT≤ Q<CT+AT. Assuming that the sending of the burst takes up to one AT (according to draft-peng-detnet-deadline-based-forwarding-06, the sending of the burst at each delay level does not take time more than one AT), then after queue-x finishes sending this burst, its CT must have been decremented to between (-2*AT, -AT).

### c) The scheduler configured in the on-time forwarding mode

Since a rotating priority queue using generic priority values cannot only judge punctuality based on the priority value, a deadline scheduler using a countdown queue is discussed herein. At this time, when the scheduler is configured in the on-time forwarding mode, the packet is always acquired from the non-empty virtual parent-queue with the currently highest priority (and CT≤0) for sending. In an embodiment, among a plurality of non-empty physical sub-queues under the virtual queue, packets are successively acquired from the non-empty physical sub-queues in a direction from a physical sub-queue with a small delay level to a physical sub-queue with a large delay level for sending. Only after one physical sub-queue is cleared, the next non-empty physical sub-queue is read. Note that any virtual parent-queue with CT>0 is not allowed to send packets.

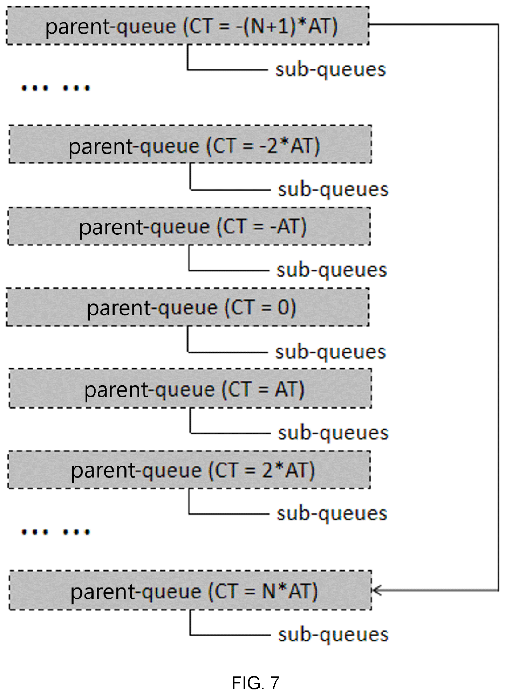

Fig. 7 is a schematic diagram of another relationship between minimum countdown values and maximum countdown values according to embodiments of the present disclosure. As shown in Fig. 7, when the deadline scheduler of the countdown queue is configured in the in-time forwarding mode, the maximum countdown value is a preset N*AT, for example, N is 100 and AT is 10 us; the minimum countdown value can reach-(N+1)*AT, but will be immediately flipped to N*AT. The total number of virtual parent-queues is 2*N+1. The advantage of this method is that any virtual parent-queue in a sending state (even a virtual parent-queue with CT≤0) always can receive new packets at the same time, i.e. newly arriving packets always select, based on their allowed queue delay Q, a virtual parent-queue with a corresponding CT according to CT≤Q<CT+AT, regardless of whether the virtual parent-queue is in a sending state.

In such method, when the end-to-end delay experienced by a packet corresponding to the specific delay level violates the deadline, the exceeded amount is at most the duration of the delay level.

It should be noted that the reason why the minimum countdown value can reach -(N+1)*AT is based on the following consideration: assume that among all current virtual parent-queues, the CT of the virtual parent-queue queue-x is the smallest and is between (-AT, 0), at this time, the bursts of all delay_levels are received concurrently, and all these bursts will be inserted into the queue-x according to CT≤Q<CT+AT. Since sending all bursts takes up to a maximum of N*AT, then after queue-x finishes sending this burst, its CT must have been decremented to between (-N+1)*AT, -N*AT).

### Scenario embodiment 2

According to the setting of the forwarding method for different queues and forwarding modes in scenario embodiment 1, the scenario embodiment 2 specifically describes the scheduling of ordered queues in the in-time forwarding mode.

According to the delay levels and burst resources thereof described in draft-peng-detnet-deadline-based-forwarding-06, it is assumed that the scheduler supports 10 delay levels, which are respectively recorded as d10, d20, ..., d100, that is, the minimum delay level is 10 us, the second is 20 us, and so on, and the maximum delay level is 100 us. The interval between adjacent delay levels is 10 us, that is, the value of AT is 10 us. Assuming that the upper limit of the burst corresponding to each delay level is b10, b20, ... , b100 respectively, for simplicity, the bursts contributed by the bandwidth resource of each delay level within any time interval are ignored, that is, assuming that the sending time consumed by the upper burst limit of the burst of each delay level is about one AT. In addition, it is also assumed that both the intra-node forwarding delay F and the link propagation delay are 0.

Assuming that at a time of T0, the ordered queue of the scheduler is initially empty.

The following burst order to reach the scheduler aims to create as many backlogs as possible in the queue and verify whether those backlogs violate their deadline.

At the time of T0, it is assumed that eligibility bursts arriving at the scheduler concurrently from a plurality of incoming ports are b10, b20, b30, b40, b50, b100. It should be noted that the legal burst means that the accumulated delay deviation E of the burst is 0. Then b10 is compared and inserted into the ordered queue according to the value T0+10, b20 is compared and inserted into the ordered queue according to the value T0+20, and so on, and b100 is inserted into the ordered queue according to the value T0+100. It can be seen that, in the ordered queue, in the direction from the head to the tail of the queue, the elements are b10, b20, b30, b40, b50, and b100 in sequence, and b10 starts to be sent immediately.

At a time of T0+10 us, b10 is sent completely, and its deadline of 10 us is not violated. At this time, the ordered queue still has the remaining elements b20, b30, b40, b50, and b100. It is assumed that an eligibility burst b90 is received from the incoming port at this time, the b90 is compared and inserted into the ordered queue according to the value T0+10+90, and because its delay level d90 is smaller than the delay level d100 of the existing element b100 in the queue, it is inserted in front of b100, that is, the elements in the ordered queue are b20, b30, b40, b50, b90, and b100, and b20 starts to be sent immediately.

At a time of T0+20 us, of b20 is sent completely, and its deadline of 20 us is not violated . At this time, the ordered queue still has the remaining elements b30, b40, b50, b90, and b100. It is assumed that an eligibility burst b80 is received from the incoming port at this time, the b80 is compared and inserted into the ordered queue according to the value T0+20+80, and because its delay level d80 is smaller than the delay level d90 of the existing element b90 in the queue, it is inserted in front of b90, that is, the elements in the ordered queue are b30, b40, b50, b80, b90, and b100, and b30 starts to be sent immediately.

By analogy, subsequent bursts such as b70 and b60 that arrive sequentially can be compared with the existing elements in the ordered queue and inserted into appropriate positions, so that the bursts sent sequentially in sequence are b40, b50, b60, b70, b80, b90, and b100, and each burst does not exceed its deadline.

If the method in the embodiment of the present disclosure is not adopted, b60, b70, b80, b90, b100 are not correctly ordered in the ordered queue, causing some of them to violate the deadlines thereof.

### Scenario embodiment 3

This scenario embodiment describes the scheduling of ordered queues in the on-time forwarding mode.

According to the delay levels and burst resources thereof described in draft-peng-detnet-deadline-based-forwarding-06, it is assumed that the scheduler supports 10 delay levels, which are respectively recorded as d10, d20, ..., d100, that is, the minimum delay level is 10 us, the second is 20 us, and so on, and the maximum delay level is 100 us. The interval between adjacent delay levels is 10 us, that is, the value of AT is 10 us. Assuming that the upper limit of the burst corresponding to each delay level is b10, b20, ... , b100 respectively, for simplicity, the bursts contributed by the bandwidth resource of each delay level within any time interval are ignored, that is, assuming that the sending time consumed by the upper burst limit of the burst of each delay level is about one AT. In addition, it is also assumed that both the intra-node forwarding delay F and the link propagation delay are 0.

Assuming that at the time of T0, the ordered queue of the scheduler is initially empty.

The following burst order to reach the scheduler aims to create as many backlogs as possible in the queue and verify whether those backlogs violate their deadline.

At the time of T0, assuming that the eligibility burst reaching the scheduler is b100, it will be inserted into the ordered queue according to the value of T0+100. At this time, the element in the ordered queue is b100. Due to the on-time forwarding mode, b100 is not sent until the time T0+100 us.

At the time of T0+10 us, assuming that the eligibility burst reaching the scheduler is b90, it will be inserted into the ordered queue according to the value of T0+10+90, and because its delay level d90 is smaller than the delay level d100 of the existing element b100 in the queue, it is inserted in front of b100, that is, the elements in the ordered queue are b90 and b100. Due to the on-time forwarding mode, b90 is also not sent until the time T0+100 us.

By analogy, eligibility bursts b80, b70, b60, b50, b40, b30, b20, and b10 arrive sequentially every 10 us, so that the elements in the ordered queue are b10, b20, b30, b40, b50, b60, b70, b80, b90, and b100. Due to the on-time forwarding mode, they are not sent until the time T0+100 us.

At the time of T0+100 us, sending the head element b10 takes 10 us, and it can be seen that b10 exceeds its deadline of 10 us, i.e., the accumulated delay deviation E of b10 is set to -10 us.

At the time of T0+110 us, sending the head element b20 takes 10 us, and it can be seen that b20 exceeds its deadline of 20 us, i.e., the accumulated delay deviation E of b20 is set to -20 us.

By analogy, the burst corresponding to each delay level exceeds its deadline by the duration of the corresponding delay level.

If the method according to the embodiments of the present disclosure is not adopted, in the above example, the expiration time of the burst corresponding to each delay level is uncertain when the burst exceeds its deadline, for example, b10 may exceed its deadline by 100 us.

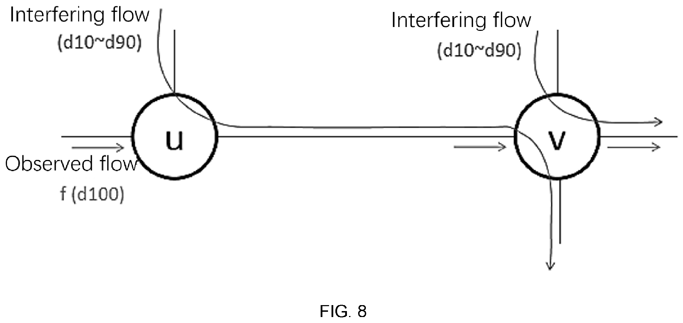

Fig. 8 is a schematic diagram of a delay evaluation according to embodiments of the present disclosure. As shown in Fig. 8, the phenomenon of deadline violation does not accumulate with the increase of the hop count. That is, when the end-to-end delay of a certain burst its deadline, the exceeded amount is at most the duration of the delay level corresponding to the burst. Fig. 8 illustrates a situation where, after the delay of each hop of the observed flow f (corresponding to the delay level d100) exceeds the deadline of 100 us at node u according to the above process, it is further delayed by other interfering flows at the downstream node v.

Assuming that an eligibility burst arriving at the local time T0+10 us of the node v is b90, an eligibility burst arriving at the time T0+20 us is b80, ... , and an eligibility burst arriving at the time T0+90 us is b10. At this time , the elements in the ordered queue are b10, b20, b30, b40, b50, b60, b70, b80, and b90.

Then, an ineligibility (note: because E = -100 us) burst arriving at the time of T0+100 us is the observed b100. It will be inserted into the ordered queue according to the value of T0+100+100-100, and because its delay level d100 is larger than the delay level d90 of the existing element b90 in the queue, it is inserted behind b90. At this time, the elements in the ordered queue are b10, b20, b30, b40, b50, b60, b70, b80, b90, and b100. This means that the sending of b100 will be completed only at T0+200 us. That is, the actual residence delay experienced on the node v is 100 us, which is consistent with the planned residence delay 100 us, and there is no update to the accumulated delay deviation E, which is still-100 us.

### Scenario embodiment 4

This scenario embodiment describes the scheduling of countdown queues in the in-time forwarding mode.

According to the delay levels and burst resources thereof described in draft-peng-detnet-deadline-based-forwarding-06, it is assumed that the scheduler supports 10 delay levels, which are respectively recorded as d10, d20, ..., d100, that is, the minimum delay level is 10 us, the second is 20 us, and so on, and the maximum delay level is 100 us. The interval between adjacent delay levels is 10 us, that is, the value of AT is 10 us. Assuming that the upper limit of the burst corresponding to each delay level is b10, b20, ... , b100 respectively, for simplicity, the bursts contributed by the bandwidth resource of each delay level within any time interval are ignored, that is, assuming that the sending time consumed by the upper burst limit of the burst of each delay level is about one AT. In addition, it is also assumed that both the intra-node forwarding delay F and the link propagation delay are 0.

Assuming that at the time of T0, the countdown queue of the scheduler is initially empty, the CT values of the virtual parent-queues are as follows:
parent-queue-A (CT = -10)
parent-queue-B (CT = 0)
parent-queue-C (CT = 10)
parent-queue-D (CT = 20)
parent-queue-E (CT = 30)
parent-queue-F (CT = 40)
parent-queue-G (CT = 50)
parent-queue-H (CT = 60)
parent-queue-I (CT = 70)
parent-queue-J (CT = 80)
parent-queue-K (CT = 90)
parent-queue-L (CT = 100)

The following burst order to reach the scheduler aims to create as many backlogs as possible in the queue and verify whether those backlogs violate their deadline.

At the time of T0, it is assumed that eligibility bursts arriving at the scheduler concurrently from a plurality of incoming ports are b10, b20, b30, b40, b50, b100. It should be noted that the legal burst means that the accumulated delay deviation E of the burst is 0. Then b10 is inserted into parent-queue-C according to the value Q=D+E-F=10, b20 is inserted into parent-queue-D according to the value Q=D+E-F=20, and so on, and b100 is inserted into parent-queue-L according to Q=D+E-F=100. The status of the queues is as follows, and b10 starts to be sent immediately.
parent-queue-A (CT = -10)
parent-queue-B (CT = 0)
parent-queue-C (CT = 10)
sub-queue-d10: b10
parent-queue-D (CT = 20)
sub-queue-d20: b20
parent-queue-E (CT = 30)
sub-queue-d30: b30
parent-queue-F (CT = 40)
sub-queue-d40: b40
parent-queue-G (CT = 50)
sub-queue-d50: b50
parent-queue-H (CT = 60)
parent-queue-I (CT = 70)
parent-queue-J (CT = 80)
parent-queue-K (CT = 90)
parent-queue-L (CT = 100)
sub-queue-d100: b100

At the time of T0+10 us, b10 is sent completely, and its deadline of 10 us is not violated. At this time, the entire countdown queue still has the remaining elements b20, b30, b40, b50, and b100. The CT of each virtual parent-queue is decremented by 10. It is assumed that an eligibility burst b90 is received from the incoming port at this time, the b90 is inserted into the parent-queue-L according to Q=D+E-F=90. The status of the queues is as follows, and b20 starts to be sent immediately.
parent-queue-A (CT = 100)
parent-queue-B (CT = -10)
parent-queue-C (CT = 0)
parent-queue-D (CT = 10)
sub-queue-d20: b20
parent-queue-E (CT = 20)
sub-queue-d30: b30
parent-queue-F (CT = 30)
sub-queue-d40: b40
parent-queue-G (CT = 40)
sub-queue-d50: b50
parent-queue-H (CT = 50)
parent-queue-I (CT = 60)
parent-queue-J (CT = 70)
parent-queue-K (CT = 80)
parent-queue-L (CT = 90)
sub-queue-d90: b90
sub-queue-d100: b100

By analogy, subsequent bursts such as b80, b70, and b60 that arrive sequentially can be inserted into physical sub-queues of parent-queue-L, so that the bursts sent sequentially in sequence are b40, b50, b60, b70, b80, b90, and b100, and each burst does not exceed its deadline.

If the method in the embodiment of the present disclosure is not adopted, b60, b70, b80, b90, b100 are not correctly ordered in the countdown queue, causing some of them to violate the deadlines thereof.

### Scenario embodiment 5

This scenario embodiment describes the scheduling of countdown queues in the on-time forwarding mode.

According to the delay levels and burst resources thereof described in draft-peng-detnet-deadline-based-forwarding-06, it is assumed that the scheduler supports 10 delay levels, which are respectively recorded as d10, d20, ..., d100, that is, the minimum delay level is 10 us, the second is 20 us, and so on, and the maximum delay level is 100 us. The interval between adjacent delay levels is 10 us, that is, the value of AT is 10 us. Assuming that the upper limit of the burst corresponding to each delay level is b10, b20, ... , b100 respectively, for simplicity, the bursts contributed by the bandwidth resource of each delay level within any time interval are ignored, that is, assuming that the sending time consumed by the upper burst limit of the burst of each delay level is about one AT. In addition, it is also assumed that both the intra-node forwarding delay F and the link propagation delay are 0.

Assuming that at the time of T0, the countdown queue of the scheduler is initially empty, the CT values of the virtual parent-queues are as follows:
parent-queue-A (CT = -100)
parent-queue-B (CT = -90)
parent-queue-C (CT = -80)
parent-queue-D (CT = -70)
parent-queue-E (CT = -60)
parent-queue-F (CT = -50)
parent-queue-G (CT = -40)
parent-queue-H (CT = -30)
parent-queue-I (CT = -20)
parent-queue-J (CT = -10)
parent-queue-K (CT = 0)
parent-queue-L (CT = 10)
parent-queue-M (CT = 20)
parent-queue-N (CT = 30)
parent-queue-O (CT = 40)
parent-queue-P (CT = 50)
parent-queue-Q (CT = 60)
parent-queue-R (CT = 70)
parent-queue-S (CT = 80)
parent-queue-T (CT = 90)
parent-queue-U (CT = 100)

The following burst order to reach the scheduler aims to create as many backlogs as possible in the queue and verify whether those backlogs violate their deadline.

At the time of T0, assuming that the eligibility burst reaching the scheduler is b100, it will be inserted into the parent-queue U according to Q=D+E-F=100. Due to the on-time forwarding mode, all virtual parent-queues with CT>0 do not send a packet.

At the time of T0+10 us, assuming that the eligibility burst reaching the scheduler is b90, it will also be inserted into the parent-queue-U according to Q=D+E-F=90.

By analogy, eligibility bursts b80, b70, b60, b50, b40, b30, b20, and b10 arrive sequentially every 10 us, where all the bursts are inserted into the parent-queue-U.

At the time of T0+100 us, the status of the countdown queues is as follows:
parent-queue-A (CT = 10)
parent-queue-B (CT = 20)
parent-queue-C (CT = 30)
parent-queue-D (CT = 40)
parent-queue-E (CT = 50)
parent-queue-F (CT = 60)
parent-queue-G (CT = 70)
parent-queue-H (CT = 80)
parent-queue-I (CT = 90)
parent-queue-J (CT = 100)
parent-queue-K (CT = -100)
parent-queue-L (CT = -90)
parent-queue-M (CT = -80)
parent-queue-N (CT = -70)
parent-queue-O (CT = -60)
parent-queue-P (CT = -50)
parent-queue-Q (CT = -40)
parent-queue-R (CT = -30)
parent-queue-S (CT = -20)
parent-queue-T (CT = -10)
parent-queue-U (CT = 0)
sub-queue-d10: b10
sub-queue-d20: b20
sub-queue-d30: b30
sub-queue-d40: b40
sub-queue-d50: b50
sub-queue-d60: b60
sub-queue-d70: b70
sub-queue-d80: b80
sub-queue-d90: b90
sub-queue-d100: b100

At the time of T0+100 us, sending b10 takes 10 us, and it can be seen that b10 exceeds its deadline of 10 us, i.e., the accumulated delay deviation E of b10 is set to -10 us.

At the time of T0+110 us, sending b20 takes 10 us, and it can be seen that b20 exceeds its deadline of 20 us, i.e., the accumulated delay deviation E of b20 is set to -20 us.

By analogy, the burst corresponding to each delay level exceeds its deadline by the duration of the corresponding delay level.

If the method according to the embodiments of the present disclosure is not adopted, in the above example, the expiration time of the burst corresponding to each delay level is uncertain when the burst exceeds its deadline, for example, b10 may exceed its deadline by 100 us.

It should be noted that, this phenomenon of deadline violation does not accumulate with the increase of the hop count. That is, when the end-to-end delay of a certain burst its deadline, the exceeded amount is at most the duration of the delay level corresponding to the burst. Still referring to Fig. 8, after the delay of each hop of the observed flow f (corresponding to the delay level d100) exceeds the deadline of 100 us at node u, it is further delayed by other interfering flows at the downstream node v.

Assuming that an eligibility burst arriving at the local time T0+10 us of the node v is b90, and is inserted into queue-x (CT=90); an eligibility burst arriving at the time T0+20 us is b80, ... , and an eligibility burst arriving at the time T0+90 us is b10. These bursts are all inserted into the same virtual parent-queue queue-x, and at this time, the CT of queue-x becomes 10.

Then, an ineligibility (note: because E = -100 us) burst arriving at the time of T0+100 us is the observed b100. It will also be insert into queue-x according to Q=D+E-F=0 (at which time the CT of queue-x becomes 0). At this time, the elements in the virtual parent-queue queue-x are b10, b20, b30, b40, b50, b60, b70, b80, b90, and b100. This means that the sending of b100 will be completed only at T0+200 us. That is, the actual residence delay experienced on the node v is 100 us, which is consistent with the planned residence delay 100 us, and there is no update to the accumulated delay deviation E, which is still-100 us.

In conclusion, the embodiments of the present disclosure provide a packet forwarding method. In a node in a network, a deadline queue scheduler is created for a specific outgoing port, and may be an ordered queue or a rotation priority queue. For an ordered queue, a method for inserting a packet into the queue is defined, and in-time and on-time forwarding modes based on this method are described. For a rotation priority queue, a queue allocation method is defined, including a plurality of virtual parent-queues and physical sub-queues, and in-time and on-time forwarding modes based on this method are described. As a result, in the in-time forwarding mode, the sending of the packet will not violate its deadline, and in the on-time forwarding mode, the sending of the packet has strict jitter assurance. In an actual implementation process, whether the method provided by the embodiments of the present disclosure is adopted can be verified through description of the deadline scheduling mechanism of the link included in the disclosed user configuration guidance manual (for example, configuring a deadline scheduler instance, an in-time or on-time forwarding mode, supported delay levels, intervals between delay levels), information such as a planned residence time and an accumulated delay deviation carried in a packet, or intercommunication testing and packet capturing among multiple manufactures.

The above are only preferred embodiments of the embodiments of the present disclosure, and are not intended to limit the embodiments of the present disclosure. For those skilled in the art, the embodiments of the present disclosure may have various modifications and variations. Any modifications, equivalent replacements, improvements and the like made within the principle of the embodiments of the present disclosure shall fall within the scope of protection of the embodiments of the present disclosure.

## Claims

1. A packet forwarding method, comprising:
acquiring a first residence reference value of a first packet, and inserting the first packet into a corresponding position of an ordered queue according to the first residence reference value; and
forwarding the first packet according to a forwarding mode of the ordered queue.

2. The method according to claim 1, wherein,
the first residence reference value is a sum of a time at which the first packet arrives at an incoming port of a node, a planned residence time of the first packet in the node, and an accumulated residence time deviation carried in the first packet.

3. The method according to claim 2, wherein inserting the first packet into a corresponding position of an ordered queue according to the first residence reference value comprises:
inserting the first packet at a position closer to a head of the ordered queue for a smaller first residence reference value;
inserting the first packet at a position closer to the head of the ordered queue for a smaller planned residence time when the first residence reference values are equal; and
inserting the first packet at a position closer to the head of the ordered queue for an earlier arrival at an outgoing port of the node when both the first residence reference values and the planned residence times are equal.

4. The method according to claim 2, wherein forwarding the first packet according to a forwarding mode of the ordered queue comprises:
in response to the forwarding mode being in-time forwarding, acquiring the first packet from the head of the ordered queue for forwarding.

5. The method according to claim 2, wherein forwarding the first packet according to a forwarding mode of the ordered queue comprises:
in response to the forwarding mode being on-time forwarding, determining whether the first residence reference value of the first packet at the head of the ordered queue is less than or equal to a current time, and if so, forwarding the first packet.

6. A packet forwarding method, comprising:
acquiring an allowed queuing delay and a second residence reference value of a second packet, and inserting the second packet into a corresponding position of a rotation priority queue according to the allowed queuing delay and the second residence reference value; and
forwarding the second packet according to a forwarding mode of the rotation priority queue.

7. The method according to claim 6, wherein,
a value of the allowed queuing delay is obtained by subtracting a forwarding delay of the second packet in a node from a sum of a planned residence time of the second packet in the node and an accumulated residence time deviation carried in the second packet;
the second residence reference value is obtained by subtracting the forwarding delay of the second packet in the node from the planned residence time of the second packet in the node.

8. The method according to claim 7, wherein inserting the second packet into a corresponding position of a rotation priority queue according to the allowed queuing delay and the second residence reference value comprises:
selecting a virtual parent-queue of the rotation priority queue according to the allowed queuing delay, wherein a first priority of the selected virtual parent-queue is less than or equal to the allowed queuing delay, and a sum of the first priority and a priority arithmetic interval AT is greater than the allowed queuing delay, wherein the priority arithmetic interval is a difference between first priorities of adjacent virtual parent-queues; and
selecting a physical sub-queue of the virtual parent-queue according to the second residence reference value, wherein a difference value between a delay level of the selected physical sub-queue and the second residence reference value is the smallest, and the delay level is less than or equal to the second residence reference value.

9. The method according to claim 7, wherein forwarding the second packet according to a forwarding mode of the rotation priority queue comprises:
in response to the forwarding mode being in-time forwarding, selecting, among the rotation priority queue, the second packet from a virtual parent-queue with a highest priority for forwarding.

10. The method according to claim 7, wherein forwarding the second packet according to a forwarding mode of the rotation priority queue comprises:
in response to the forwarding mode being on-time forwarding, selecting, among virtual parent-queues of the rotation priority queue having a countdown CT less than or equal to 0, the second packet from a virtual parent-queue with a highest priority for forwarding.

11. The method according to claim 9 or 10, wherein selecting the second packet from a virtual parent-queue with a highest priority for forwarding comprises:
selecting, from all the virtual parent-queues, a non-empty virtual parent-queue having a minimum countdown **CT** as the virtual parent-queue with the highest priority; and
acquiring the second packet from a non-empty physical sub-queue according to an ascending order of delay levels of the physical sub-queues of the virtual parent-queue for forwarding.

12. The method according to claim 11, wherein after selecting, from all the virtual parent-queues, a non-empty virtual parent-queue having a minimum countdown CT as the virtual parent-queue with the highest priority, the method further comprises:
in response to the forwarding mode being in-time forwarding, flipping a CT value of a virtual parent-queue, of which a minimum achievable CT value is -2*AT, to a preset maximum CT value; and
in response to the forwarding mode being on-time forwarding, flipping a CT value of a virtual parent-queue, of which a minimum achievable CT value is -(N+1)*AT, to a preset maximum CT value, wherein N is a number of preset delay levels.

13. A computer readable storage medium, having a computer program stored therein, wherein the computer program is configured to, when being executed by a processor, implement the method as claimed in any one of claims 1 to 12.

14. An electronic device, comprising a memory, a processor, and a computer program that is stored in the memory and executable by the processor, wherein the processor is configure to, when executing the computer program, implements the method as claimed in any one of claims 1 to 12.
